# EUROPÄISCHE PATENTANMELDUNG

(11) **EP 3 202 543 A1**
(43) Veröffentlichungstag der Anmeldung: **09.08.2017**
(21) Anmeldenummer: 16202669.4
(22) Anmeldetag: 07.12.2016
(51) Int. Cl.: B26D 3/11

(54) **VORRICHTUNG UND VERFAHREN ZUM SPIRALFÖRMIGEN SCHNEIDEN VON LEBENSMITTELN**

(30) Priorität: 08.02.2016 CH 1672016
(71) Anmelder: Betty Bossi AG, 8021 Zürich (CH)
(72) Erfinder: ENGLER, Valentin, 8032 Zürich (CH)
(74) Vertreter: Gachnang, Hans Rudolf

(57) **Zusammenfassung**

Eine Vorrichtung (1) zur Verarbeitung von Lebensmitteln umfasst einen Behälter (2) enthaltend ein Trennelement (3, 4) zum Durchtrennen eines Lebensmittels zur Erzeugung eines bandförmigen, spiralförmigen Schnittguts, ein Gehäuse (5) zur Aufnahme des Behälters (2) sowie ein Auflageelement (6) zur Auflage des Lebensmittels, wobei der Behälter (2) im Gehäuse (5) drehbar ist. Ein Zwischenraum (7) ist zwischen dem Auflageelement (6) und dem Trennelement (3, 4) zur Einspannung des Lebensmittels vorgesehen, wobei das Trennelement (3, 4) zum Durchtrennen des Lebensmittels mit dem Behälter (2) verbunden ist, sodass das Schnittgut durch Drehbewegung des Behälters (2) mittels des Trennelements (3, 4) erzeugbar ist und in einen Innenraum (24) des Behälters (2) führbar ist.

## Beschreibung

Gegenstand der Erfindung ist eine Vorrichtung und ein Verfahren zur Verarbeitung von Lebensmitteln gemäss Oberbegriff des Patentanspruchs 1. Insbesondere dient die Vorrichtung zur Verarbeitung von Früchten oder Gemüse. Die Vorrichtung dient insbesondere dazu, Früchte oder Gemüse zu zerkleinern.

Aus dem Stand der Technik ist eine Vorrichtung zur Herstellung von spiralförmigen Bändern aus Gemüse bekannt, wozu beispielsweise Gurken oder Karotten verwendet werden können. Diese Vorrichtung besteht aus einem zylinderförmigen Aufnahmebehälter für das Gemüse und einem zylinderförmigen Aufsetzelement. Das zylinderförmige Aufsetzelement weist eine Aufsetzfläche für das Gemüse auf sowie ein unterhalb der Aufsetzfläche am Zylindermantel verlaufendes Aussengewinde. Die Aufsetzfläche weist eine Mehrzahl von Halteelementen auf, die kleine Schneidkanten ausbilden, die in das Gemüse eingreifen und es drehfest auf der Aufsetzfläche positionieren. Der zylinderförmige Aufnahmebehälter ist an einem Ende offen und weist ein an der Innenwand des Zylindermantels verlaufendes Innengewinde auf. Das Innengewinde ist zum Eingriff in das Aussengewinde des Aufsetzelements bestimmt. Der Aufnahmebehälter wird auf das Aufsetzelement positioniert und dessen Innengewinde greift in das Aussengewinde des Aufsetzelements ein. Das gegenüberliegende Ende Aufnahmebehälters ist durch ein Deckelelement verschlossen, welches mindestens ein Schneidmesser enthält.

Das Gemüse befindet sich im Betriebszustand auf der Aufsetzfläche und ist im Innenraum des Aufnahmebehälters aufgenommen. Wenn der Aufnahmebehälter in eine Drehbewegung versetzt wird, das heisst auf das Aussengewinde des Aufsetzelements aufgeschraubt wird, kommt das Gemüse in Kontakt mit dem umlaufenden Schneidmesser und wird derart geschnitten, dass ein spiralförmiges Band entsteht. Wenn eine Mehrzahl von Schneidmessern im Deckelelement angeordnet sind, können eine Mehrzahl derartiger spiralförmiger Bänder hergestellt werden.

Das spiralförmige Gemüseband kann direkt auf einem Teller oder in einer Schüssel positioniert werden, beispielsweise zur Herstellung eines Salats.
Allerdings hat sich im Betrieb als nachteilig erwiesen, dass es lange dauert, bis eine Portion Gemüse auf diese Art fertig gerüstet ist, sodass der Benutzer einige Zeit einplanen muss. Zudem kann es je nach Konsistenz des Gemüses und Ausgestaltung der Schneidkanten des Aufsetzelements dazu kommen, dass das Gemüse von den Schneidkanten nicht erfasst wird und die Drehbewegung nicht mitmacht. Wenn der Durchmesser des Gemüses fast gleich gross wie der Innendurchmesser des Aufnahmebehälters ist, kann das Gemüse verkanten und stecken bleiben. Dann wird es nicht mehr dem Schneidmesser zugeführt und es erfolgt ein Zusammenpressen des Gemüses zu einer matschartigen Masse im Innenraum des Aufnahmebehälters bei fortschreitender Drehbewegung und nicht die gewünschte Zerteilung des Lebensmittels in kleine Stücke. Nachteilig an manchen bestehenden Vorrichtungen ist auch das Vorhandensein einer offenen Klinge, die eine Verletzungsgefahr darstellt.
Daher besteht Bedarf an einer Vorrichtung zur Verarbeitung von Lebensmitteln, insbesondere Früchten oder Gemüse, die ein Zerkleinern des Lebensmittels in der gewünschten Form zuverlässiger für eine Mehrzahl verschiedener Frucht- oder Gemüsesorten ermöglicht.

Aufgabe der Erfindung ist es somit, eine Vorrichtung bereitzustellen, mittels welcher eine Frucht oder ein Gemüse zuverlässiger geschnitten werden kann.
Eine weitere Aufgabe der Erfindung kann darin bestehen, das Schnittgut nach dem Schneidvorgang zu sammeln.

Gelöst wird diese Aufgabe durch eine Vorrichtung mit den Merkmalen des Patentanspruchs 1 sowie ein Verfahren gemäss Patentanspruch 9. Weitere vorteilhafte Ausführungsformen der Erfindung sind Gegenstand der abhängigen Ansprüche.

Eine Vorrichtung zur Verarbeitung von Lebensmitteln umfasst einen Behälter enthaltend ein Trennelement zum Durchtrennen eines Lebensmittels zur Erzeugung eines Schnittguts, ein Gehäuse zur Aufnahme des Behälters sowie ein Auflageelement zur Auflage des Lebensmittels. Das Auflageelement kann ein Positionierelement zur Ausrichtung des Lebensmittels im Gehäuse enthalten. Der Behälter ist im Gehäuse drehbar. Ein Zwischenraum ist zwischen dem Auflageelement und dem Trennelement zur Einspannung des Lebensmittels vorgesehen. Das Lebensmittel kann zwischen dem Auflageelement und dem Trennelement eingespannt werden. Das Trennelement ist mit dem Behälter zum Durchtrennen des Lebensmittels verbunden, sodass das Schnittgut durch Drehbewegung des Behälters mittels des Trennelements erzeugbar ist und in einen Innenraum des Behälters führbar ist. Das Schnittgut kann insbesondere als ein bandförmiges, spiralförmiges Schnittgut ausgebildet sein.

Diese Vorrichtung hat gegenüber dem Stand der Technik den Vorteil, dass das Schnittgut durch das Trennelement in den Innenraum des Behälters gelangt und im Innenraum des Behälters aufgenommen ist. Daher kann das Schnittgut unmittelbar nach Abschluss des Trennvorgangs beliebig angerichtet werden, beispielsweise in einer Schüssel oder auf einem Teller.
Der Behälter kann einen beliebig grossen Durchmesser aufweisen, sodass nicht nur schlanke, schmale, im Wesentlichen stabförmige Lebensmittel, wie beispielsweise Karotten oder Gurken, verarbeitet werden können, sondern auch knollenförmige oder im Wesentlichen kugelförmige Lebensmittel, wie beispielsweise Rüben, Sellerie, Kartoffeln, Zwiebel, Kohlrabi und dergleichen.

Nach einem Ausführungsbeispiel ist das Gehäuse ortsfest auf einer Unterlage positioniert. Der Benutzer kann die Drehbewegung einhändig ausführen, wenn das Gehäuse auf einer Unterlage fest verankert ist. Das Gehäuse kann ein Bodenelement enthalten, welches auf einer Unterlage durch einen Unterdruck gehalten werden kann. Hierzu enthält das Bodenelement ein elastisches Material, welches einen von einem Randelement begrenzten Hohlraum ausbildet. Wenn dieser von einem Randelement begrenzte Hohlraum auf eine ebene Unterlage gestellt wird, kann mit einem Unterdruck beaufschlagt werden, indem durch temporäre Verringerung des Volumens des Hohlraums die im Hohlraum befindliche Luft teilweise entfernt wird. Der Unterdruck hält das Gehäuse unverrückbar auf einer Unterlage, beispielsweise auf einem Tisch oder auf einer Arbeitsfläche.

Nach einem Ausführungsbeispiel enthält der Behälter eine Aussenwand, die einen Oberflächenabschnitt enthält, welche zumindest eine der Varianten einer glatten Oberfläche oder eines Aussengewindes umfasst.

Nach einem Ausführungsbeispiel enthält der Behälter einen Behälterboden, welcher durch das Trennelement verschliessbar sein kann. Nach einem Ausführungsbeispiel kann der Behälterboden mit dem Trennelement in einem Stück ausgebildet sein. Wenn ein anderes Schnittmuster erzeugt werden soll, wird der Behälter samt Trennelement ausgewechselt.

Insbesondere ist der Behälter auf der dem Behälterboden gegenüberliegenden Seite offen, wodurch eine Entleerungsöffnung ausgebildet ist. Der Behälter weist einen Mantel auf, der im Wesentlichen zylinderförmig ist oder einen zylinderförmigen Abschnitt aufweist. Der Behälter kann einen Handgriff enthalten, wobei der Handgriff ein Armelement und ein Fingerelement enthalten kann. Das Armelement kann an der Aussenwand des Behälters angebracht sein, wobei sich das Fingerelement vom Armelement in eine Richtung erstrecken kann, die im Wesentlichen parallel zur Drehachse des Behälters ist.

Nach einem Ausführungsbeispiel kann das Gehäuse eine Aufnahmefläche für den Mantel des Behälters enthalten, wobei die Aufnahmefläche einen Gewindeabschnitt enthalten kann. Insbesondere kann die Aufnahmefläche in einem Ringelementaufgenommen sein, welches zwischen einer Eingriffsposition und einer Entnahmeposition schwenkbar ist.

Das Trennelement kann eine konische Oberfläche enthalten, in welcher zumindest ein Schneidelement aufgenommen ist. Die konische Oberfläche ist insbesondere rotationssymmetrisch in Bezug auf die Drehachse angeordnet. Die Spitze des Konus ragt in den Innenraum des Behälters 2 hinein. Das Lebensmittel kann zumindest teilweise in dem durch den Konus gebildeten Hohlraum aufgenommen werden und wird durch den Konus zentriert. Insbesondere können ein erstes Trennelement und ein zweites Trennelement vorgesehen sein, wobei das erste Trennelement abnehmbar und durch das zweite oder ein weiteres Trennelement ersetzbar sein kann.

Ein Verfahren zum Durchtrennen eines Lebensmittels zur Erzeugung eines bandförmigen, spiralförmigen Schnittguts, umfasst die nachfolgenden Schritte: Positionieren einer Vorrichtung zur Verarbeitung von Lebensmitteln auf einer Unterlage, Entnehmen eines Behälters aus einem Gehäuse, Positionieren eines Lebensmittels auf einem Auflageelement, Einsetzen eines Trennelements in den Behälter. Die Verarbeitung des Lebensmittels erfolgt durch die nachfolgenden Schritte: Positionieren des Behälters mit dem Trennelement auf dem Lebensmittel im Gehäuse, sodass das Lebensmittel zwischen dem Auflageelement und dem Trennelement gehalten oder eingeklemmt wird und der Behälter im Gehäuse aufgenommen ist, Drehen des Behälters im Gehäuse, wobei durch das Trennelement das Lebensmittel durchtrennt wird und das bandförmige, spiralförmige Schnittgut im Innenraum des Behälters aufgenommen wird, Entnahme des Behälters mit dem Schnittgut nach Abschluss der Verarbeitung.
Insbesondere kann das Ringelement von der Entnahmeposition in die Eingriffsposition bewegt werden, bevor die Drehung des Behälters im Gehäuse eingeleitet wird. Dieser Verfahrensschritt wird durchgeführt, wenn der Behälter an seiner Aussenwand ein Aussengewinde aufweist, welches in ein entsprechendes Innengewinde oder einen
Innengewindeabschnitt des Ringelements eingreifen kann.

Anhand eines illustrierten Ausführungsbeispiels wird die Erfindung näher erläutert. Es zeigen
- Figur 1: eine Ansicht einer Vorrichtung gemäss eines Ausführungsbeispiels der Erfindung,
- Figur 2: eine Explosionsdarstellung der Vorrichtung gemäss Fig. 1,
- Figur 3: eine Ansicht des Ringelements gemäss Fig. 1 von oben,
- Figur 4: einen Schnitt durch das Gehäuse der Vorrichtung gemäss Fig. 1,
- Figur 5: eine Ansicht des Ringelements gemäss Fig. 1 von unten,
- Figur 6: eine Ansicht des Behälters gemäss Fig. 1,
- Figur 7a: eine Ansicht eines Trennelements gemäss einer ersten Variante gemäss Fig. 1,
- Figur 7b: ein Detail der Fig. 7a,
- Figur 8: eine Ansicht eines Trennelements gemäss einer zweiten Variante gemäss Fig. 1,
- Figur 9: eine Ansicht eines Auflageelements gemäss des Ausführungsbeispiels der Fig. 1,
- Figur 10: eine Ansicht einer Vorrichtung 1 gemäss eines zweiten Ausführungsbeispiels der Erfindung,
- Figur 11: eine Explosionsdarstellung der Vorrichtung gemäss Fig. 10,
- Figur 12: einen Schnitt durch das Gehäuse der Vorrichtung gemäss Fig. 10,
- Figur 13: eine Ansicht des Behälters gemäss Fig. 10,
- Figur 14: eine Ansicht eines Trennelements gemäss einer ersten Variante gemäss Fig. 10 von aussen,
- Figur 15: eine Ansicht eines Trennelements gemäss einer zweiten Variante gemäss Fig. 10 von innen,
- Figur 16: eine Ansicht eines Auflageelements gemäss des Ausführungsbeispiels der Fig. 10.

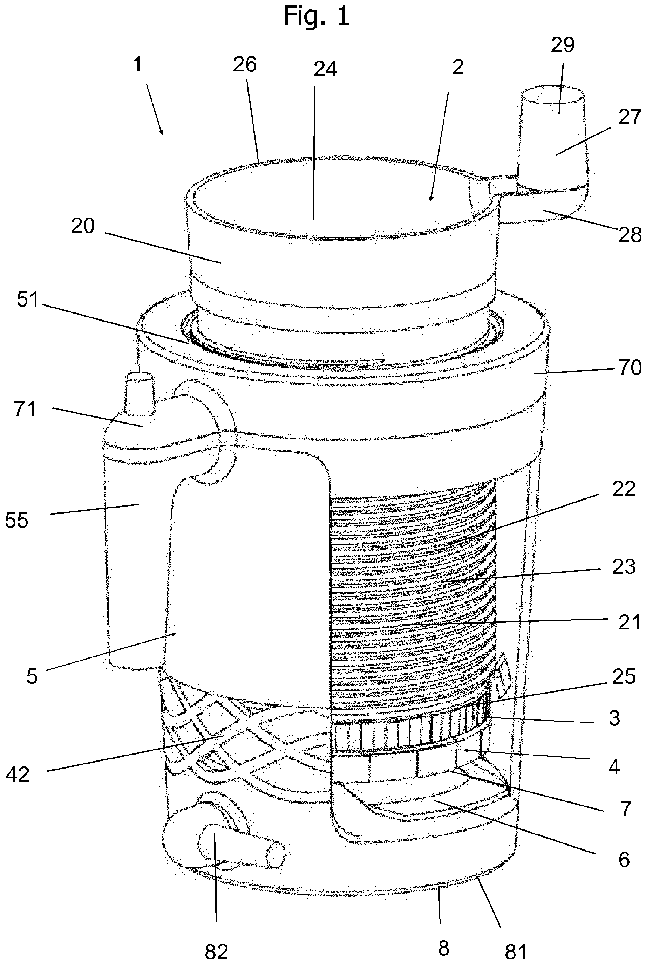

In Figur 1 ist mit Bezugszeichen 1 eine Vorrichtung zur Verarbeitung von Lebensmitteln umfassend einen Behälter 2 enthaltend ein Trennelement 3, 4 zum Durchtrennen eines Lebensmittels zur Erzeugung eines bandförmigen, spiralförmigen Schnittguts gezeigt. Ein Gehäuse 5 ist zur Aufnahme des Behälters 2 vorgesehen, sowie ein Auflageelement 6 zur Auflage des Lebensmittels. Das Auflageelement 6 kann ein Positionierelement 61 zur Ausrichtung des Lebensmittels im Gehäuse 5 enthalten. Der Behälter 2 ist im Gehäuse 5 drehbar. Ein Zwischenraum 7 ist zwischen dem Auflageelement 6 und dem Trennelement 3, 4 zur Aufnahme des Lebensmittels vorgesehen. Das Lebensmittel ist zwischen dem Auflageelement 6 und dem Trennelement 3, 4 einspannbar, wobei eines der Trennelemente 3, 4 zum Durchtrennen des Lebensmittels mit dem Behälter 2 verbunden ist, sodass das Schnittgut durch Drehbewegung des Behälters 2 mittels des Trennelements 3, 4 erzeugbar ist. In der vorliegenden Darstellung sind zwei Trennelemente 3, 4 übereinander gezeigt, da sie auf diese Weise angeordnet und gelagert werden können, wenn die Vorrichtung nicht in Gebrauch ist. Diese Anordnung hat den Vorteil, dass die Trennelemente 3, 4 nicht lose separat aufbewahrt werden müssen und dadurch das Risiko vermindert ist, dass die Trennelemente 3, 4 verloren gehen.

Wenn die Vorrichtung in Gebrauch ist, wird eines der Trennelemente 3, 4 ausgewählt und das andere Trennelement entsprechend zur Seite gelegt. Das Trennelement wird mit dem Behälter 2 verbunden, indem es am Behälterboden 25 in den Behälter eingeführt wird und dort befestigt wird. Hierzu ist am Behälterboden 25 eine Befestigungsvorrichtung vorgesehen. Die Befestigungsvorrichtung kann sich an der Innenwand im Innenraum des Behälters 2 befinden, sie kann auch an der Aussenwand 21 angebracht sein. Die Befestigungsvorrichtung kann einen Bajonettverschluss, eine Rastverbindung oder einen Drehverschluss umfassen. Durch die Befestigungsvorrichtung ist gewährleistet, dass das Trennelement 3, 4 verliersicher im Behälterboden 25 aufgenommen ist oder verliersicher am Behälterboden 25 angebracht ist, aber manuell wieder zur Entnahme des Lebensmittels, zur Reinigung oder zum Austausch vom Behälterboden 25 abgenommen werden kann.

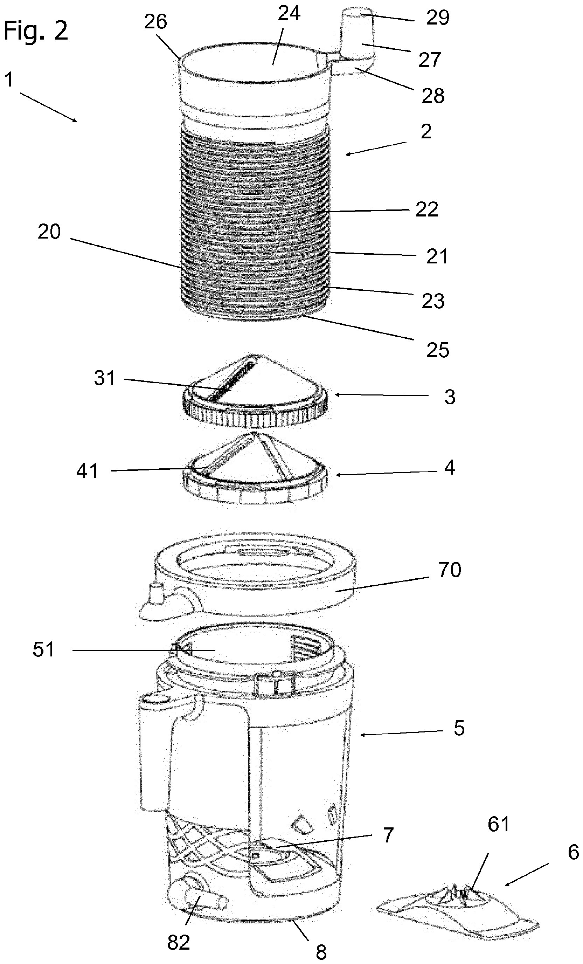

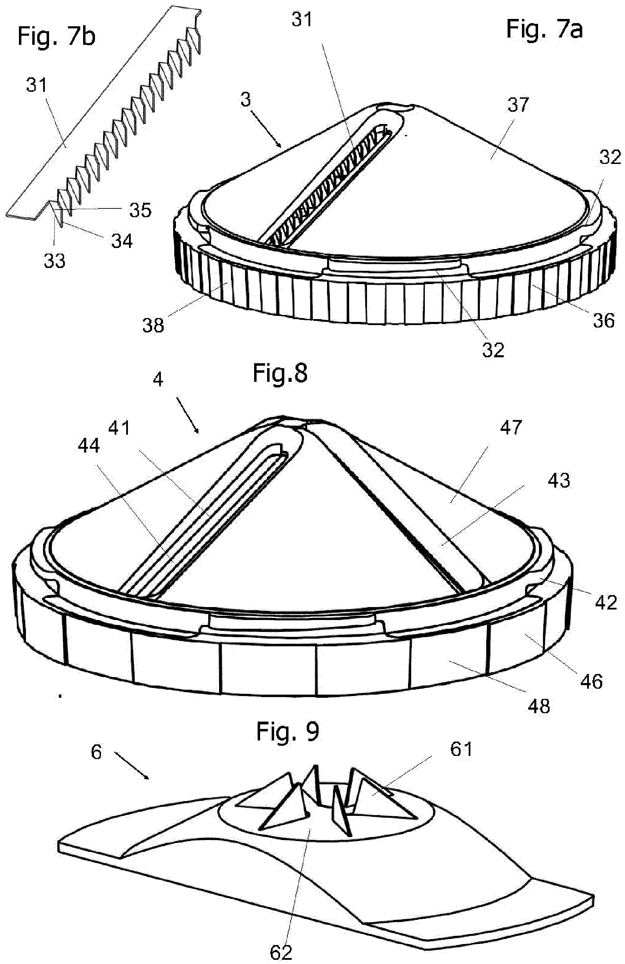

Auf dem Auflageelement 6 wird ein zu verarbeitendes Lebensmittel platziert und durch ein Positionierelement 61 verankert, beispielsweise in Fig. 2 oder Fig. 9 gezeigt ist. Das Positionierelement 61 weist vorzugsweise eine Mehrzahl von Schneidkanten auf, welche in das Lebensmittel hineinragen bzw. in das Lebensmittel einschneiden und es gegen Verdrehen oder Kippen sichern.

Der Behälter 2 kann zu diesem Zeitpunkt aus dem Gehäuse 5 entfernt sein oder kann in einer Position im Gehäuse 5 angebracht sein, in welcher nur ein geringer Teil des Mantels 20 in das Gehäuse 5 hineinragt. Insbesondere kann der Behälter 2 soweit gegen das Lebensmittel bewegt werden, bis die Unterseite des Trennelements 3, 4 auf der Oberseite des Lebensmittels aufliegt. Das Lebensmittel ist somit zwischen dem Trennelement 3, 4 und dem Auflageelement 6 eingespannt. Nun kann die Drehbewegung des Behälters 2 eingeleitet werden. Während der Drehbewegung des Behälters gelangen das oder die Schneidelemente 31 bzw. 41 des entsprechenden Trennelements 3, 4 in Eingriff mit dem Lebensmittel und schälen eine dünne Schicht vom Lebensmittel ab. Wenn zwei Schneidelemente vorgesehen sind, werden dementsprechend zwei Schichten abgeschält. Die Schichten können als spiralförmige Bänder, Streifen oder beliebigen weiteren Formen ausgebildet sein, die sich in den Innenraum des Behälters 2 ablegen. Das oder die Schneidelemente 31, 41 können Schneidkanten enthalten, die sich nicht nur in radialer Richtung erstrecken, sie können auch in axialer Richtung angeordnet sein. Insbesondere kann eine Kombination von radial ausgerichteten und axial angeordneten Schneidkanten vorgesehen sein, sodass eine Mehrzahl von spiralförmigen Teilbändern erzeugbar ist. Diese Betriebsweise dient somit der Erzeugung von spaghettiförmigen Lebensmittelbändern. Wenn nur ein Schneidelement 31, 41 sich im Wesentlichen über die gesamte Länge des Radius des Behälterbodens 25 erstreckt, können Teilbänder mit einer grösseren Bandbreite hergestellt werden. Diese Verarbeitung wird insbesondere in der Gemüseverarbeitung als Julienne bezeichnet.

Zur Drehbewegung kann der Benutzer das Gehäuse 5 am Handgriff 55 mit einer Hand halten und mit der anderen Hand den Handgriff 27 am Behälter 2 betätigen, der sich von der Aussenwand 21 von der Entleerungsöffnung 26 an in radialer und/oder axialer Richtung nach aussen erstreckt. Damit der Benutzer die Handstellung während der Drehbewegung nicht ändern muss, kann der Handgriff 27 mit einem Fingerelement 29 ausgestattet sein, welches eine drehbare Kappe aufweist. Diese drehbare Kappe ist drehbar im oder am Armelement angeordnet und weist eine Drehachse auf, die vorzugsweise im Wesentlichen parallel zur Drehachse des Behälters 2 ist.

Die Verarbeitung des Lebensmittels ist abgeschlossen, wenn der Absatz 90 des Behälters 2 auf dem Flansch 74 des Ringelements 70 aufliegt. Der Benutzer kann die Drehbewegung weiter fortsetzen, allerdings kann der Behälter 2 nicht mehr weiter ins Gehäuse 5 eingedreht werden, sodass ein Kontakt des Trennelements 3, 4 mit dem Auflageelement 6 bzw. dem Positionierelement 61 vermieden wird. Hierdurch ist sichergestellt, dass das Trennelement 3, 4 nicht mit dem Auflageelement 6 in Kontakt kommt.

Das verarbeitete Lebensmittel befindet sich im Innenraum des Behälters 2.
Der Behälter kann nunmehr aus dem Gehäuse 5 entnommen werden. Die Entnahme kann durch eine Rückdrehung des Behälters 2 in die Gegenrichtung erfolgen.

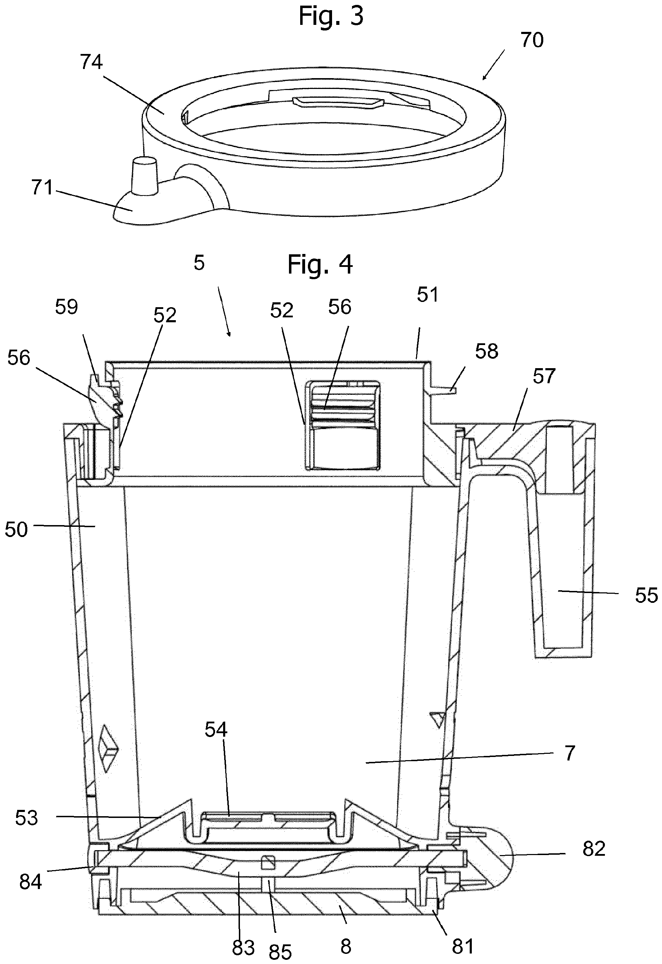

Nach einem Ausführungsbeispiel kann die Aufnahmefläche 51 des Gehäuses 5 einen oder mehrere Gewindeabschnitte 56 enthalten (siehe Fig. 3). Diese Gewindeabschnitte können zwischen einer Eingriffsposition und einer Entnahmeposition umschaltbar sein.

Der Benutzer kann das Ringelement 70 um die Drehachse des Behälters 2 verschwenken, um den oder die Gewindeabschnitte 56 von der Eingriffsposition in die Entnahmeposition umzuschalten oder umgekehrt.

Wenn sich der oder die Gewindeabschnitte 56 in der Entnahmeposition befinden, kann der Behälter 2 aus dem Gehäuse 5 entnommen werden.

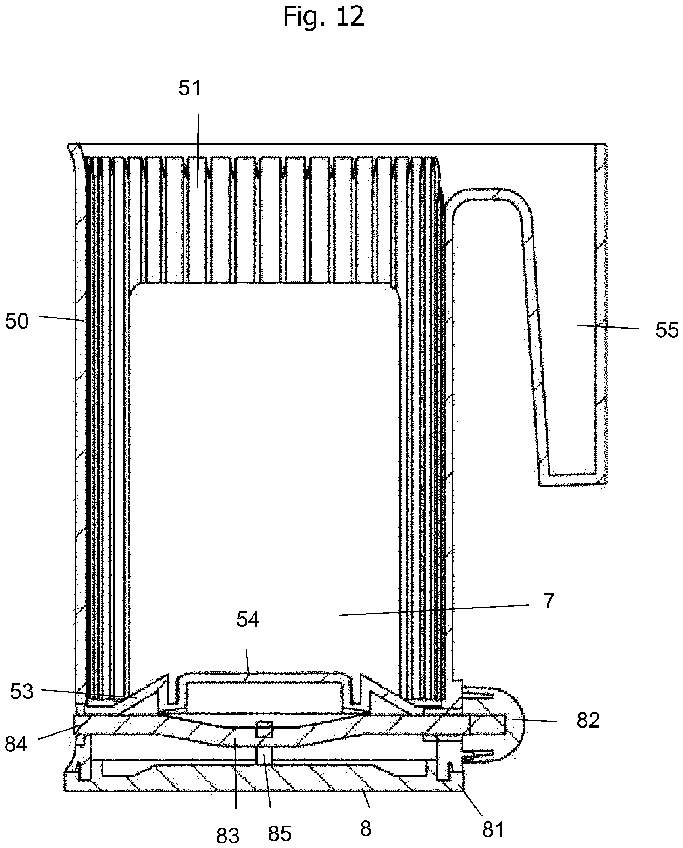

Nach einem Ausführungsbeispiel ist das Gehäuse 5 ortsfest auf einer Unterlage positioniert. Der Benutzer kann die Drehbewegung einhändig ausführen, wenn das Gehäuse 5 auf einer Unterlage fest verankert ist. Das Gehäuse 5 kann ein Bodenelement 8 enthalten, welches auf der Unterlage durch einen Unterdruck gehalten werden kann. Hierzu enthält das Bodenelement 8 ein elastisches Material, welches einen von einem Randelement 81 begrenzten Hohlraum aufweist, der mit einem Unterdruck beaufschlagbar ist. Das Bodenelement 8 kann beispielsweise mittels eines Schwenkhebels 82 in Richtung der Unterlage gedrückt werden, wodurch das Volumen zwischen dem Bodenelement 8 und der Unterlage verringert wird und die unter Überdruck stehende Luft am Randelement 81 vorbei in die Umgebung geführt wird. Hierdurch kann das Gehäuse 5 unverrückbar auf der Unterlage, beispielsweise einem Tisch oder einer Arbeitsfläche befestigt werden. Mittels des Schwenkhebels 82 kann eine Druckstange 83 betätigt werden, die einen gekrümmten Abschnitt aufweist. Der gekrümmte Abschnitt trägt einen Druckstössel 85, der in Kontakt mit dem Bodenelement 8 kommt, wenn der gekrümmte Abschnitt in eine Position gedreht wird, in welcher er den geringsten Abstand vom Bodenelement 8 aufweist. Das dem Schwenkhebel 82 gegenüberliegende Ende der Druckstange 83 kann in einer Haltehülse 84 aufgenommen sein, die im Gehäusemantel 50 aufgenommen ist. Nach dem Ausführungsbeispiel gemäss Fig. 12 kann die Haltehülse auch weggelassen werden. Nach einem weiteren Ausführungsbeispiel kann die vorgängig beschriebene Ansaugvorrichtung auch entfallen. Das Gehäuse weist dann nur den Gehäuseboden 53 auf.

Der Behälter 2 enthält eine Aussenwand 21, die einen Oberflächenabschnitt 22 enthält, welcher gemäss Fig. 1 ein Aussengewinde 23 umfasst. Der Behälter 2 enthält einen Behälterboden 25, welcher durch das Trennelement 3, 4 verschliessbar ist. Der Behälter 2 ist auf der dem Behälterboden 25 gegenüberliegenden Seite offen, wodurch eine Entleerungsöffnung 26 ausgebildet wird. Der Behälter 2 weist einen Mantel 20 auf, der sich zwischen dem Behälterboden 25 und der Entleerungsöffnung 26 erstreckt. Der Mantel 20 ist im Wesentlichen zylinderförmig oder weist einen zylinderförmigen Abschnitt auf. Der Behälter enthält einen Handgriff 27. Der Handgriff 27 enthält ein Armelement 28 und ein Fingerelement 29. Das Armelement 28 ist an der Aussenwand 21 des Behälters 2 angebracht, wobei das Fingerelement 29 sich vom Armelement 28 in eine Richtung erstreckt, die im Wesentlichen parallel zur Drehachse des Behälters 2 ist. Das Fingerelement 29 kann auf dem Armelement 28 drehbar gelagert sein. Hierdurch ist gewährleistet, dass der Benutzer eine Umdrehung des Behälters 2 immer mit derselben Handstellung vornehmen kann.

Das Trennelement 3, 4 enthält eine konische Oberfläche, in welcher zumindest ein Schneidelement 31, 41 aufgenommen ist, was beispielsweise in Fig. 2 dargestellt ist. Die konische Oberfläche ist insbesondere rotationssymmetrisch in Bezug auf die Drehachse angeordnet. Die Spitze des Konus ragt in den Innenraum des Behälters 2 hinein. Das Lebensmittel kann in dem durch den Konus gebildeten Hohlraum zumindest teilweise aufgenommen werden und durch den Konus zentriert werden.

In Fig. 2 sind die Einzelteile der Vorrichtung 1 der Fig. 1 in einer Explosionszeichnung dargestellt. Der Behälter 2 weist einen Behälterboden 25, eine Entleerungsöffnung 26 und einen sich zwischen dem Behälterboden 25 und der Entleerungsöffnung 26 einen Mantel 20 auf. Der Mantel 20 weist einen Oberflächenabschnitt 22 auf der Aussenwand 21 auf, der mit einem Aussengewinde 23 versehen ist. Der Innenraum 24 weist eine glatte Oberfläche auf. Der Behälterboden kann ebenfalls als eine Öffnung ausgebildet sein, die eines oder mehrere Halteelemente umfasst, die in dieser Darstellung nicht sichtbar sind. Diese Halteelemente dienen der Aufnahme eines der Trennelemente 3 oder 4. Das Trennelement 3 weist mindestens ein Schneidelement 31 auf, welches auf einer konischen Oberfläche angeordnet ist. Das Trennelement 4 weist mindestens zwei Schneidelemente 41 auf, welche auf einer konischen Oberfläche angeordnet sind. Jedes der Trennelemente 3, 4 kann mittels eines Drehverschlusses im Behälterboden 25 aufgenommen werden. Die Trennelemente 3, 4 sind in den Fig. 7, 8 im Detail dargestellt. Das Gehäuse 5 dient der Aufnahme des Behälters 2 sowie eines der Trennelemente 3, 4, wenn die Vorrichtung in Gebrauch ist. Das Gehäuse 5 ist mit einer Aufnahmefläche 51 versehen, die der Aufnahme des Behälters 2 dient. Die Aufnahmefläche 51 enthält Gewindeabschnitte, die mittels des Ringelements 70 in Eingriffsposition oder Entnahmeposition eingestellt werden können. Im Gehäuse 5 ist ein Auflageelement 6 aufgenommen, welches ein Positionierelement 61 aufweist, um das Lebensmittel im Gehäuse 5 zu positionieren.

Fig. 3 zeigt eine Ansicht des Ringelements 70, welches um die Aufnahmefläche 51 des Gehäuses 5 herum angeordnet ist. Das Gehäuse 5 weist eine Aufnahmefläche 51 für den Mantel 20 des Behälters 2 auf, wobei die Aufnahmefläche 51 einen Gewindeabschnitt enthalten kann, was in Fig. 4 gezeigt ist. Die Aufnahmefläche 51 ist im zusammengebauten Zustand im Ringelement 70 aufgenommen, welches zwischen einer Eingriffsposition und einer Entnahmeposition schwenkbar ist.

Figur 4 zeigt einen Schnitt durch das Gehäuse 5 der Vorrichtung gemäss Fig. 1. In Fig. 4 ist das Ringelement 70 weggelassen, welches in Fig. 3 gezeigt ist. Das Gehäuse 5 weist einen Gehäusemantel 50 auf, welcher sich zwischen der Aufnahmefläche 51 und dem Bodenelement 8 erstreckt. Der Gehäusemantel 50 weist eine erste und eine zweite Öffnung auf, um das Lebensmittel im Gehäuse positionieren zu können. Der Gehäusemantel 50 geht auf der Unterseite des Gehäuses in einen Gehäuseboden 53 über. Der Gehäuseboden 53 dient der Aufnahme eines Auflageelements 6, welches zur Positionierung des Lebensmittels verwendet wird. Das Auflageelement 6 kann einfach vom Gehäuseboden 53 abgenommen werden und gereinigt werden oder durch ein anderes Auflageelement 6 ausgetauscht werden. Der Gehäuseboden 53 enthält hierzu ein Aufsatzelement 54, welches passend zu einer entsprechenden Ausnehmung am Auflageelement ausgebildet ist. Das Auflageelement 6 kann formschlüssig auf dem Aufsatzelement 54 gehalten werden. Um das Auflageelement 6 auf dem Aufsatzelement 54 zu befestigen, sind im Gehäuseboden eine erste und eine zweite Nut vorgesehen. Gemäss dieses Ausführungsbeispiels weisen die mantelseitigen Wände der Nuten eine grössere Höhe auf als das Auflageelement 6. Diese mantelseitigen Wände bilden eine Verdrehsicherung aus, die verhindert, dass das Auflageelement 46 seinen Sitz auf dem Aufsatzelement verlassen kann, wenn durch die Drehbewegung Torsionskräfte in das Lebensmittel und über das Lebensmittel die Positionierelemente 61 des Auflageelements 6 eingeleitet werden.

Oberhalb des Gehäusebodens 53 schliesst ein Zwischenraum 7 an. Dieser Zwischenraum 7 enthält zu Betriebsbeginn das Lebensmittel, welches mit der Vorrichtung verarbeitet werden soll. Das Lebensmittel kann im Gehäuse platziert werden, bevor der Behälter 2 mit dem entsprechenden Trennelement 3, 4 durch die Aufnahmefläche 51 hindurch geführt wird. Mit dem Gehäusemantel 50 kann ein Handgriff 55 verbunden sein, der dem Benutzer die Handhabung der Vorrichtung vereinfacht. Insbesondere kann der Benutzer den Handgriff 55 mit einer Hand halten, während er mittels des Ringelements 70 zwischen der Entnahmeposition und der Eingriffsposition umschaltet. Das Ringelement 70 weist hierzu einen Greifarm 71 auf, der in der Eingriffsposition über dem Handgriff 55 zu liegen kommt, was in Fig. 1 gezeigt ist. In der Entnahmeposition liegt der Greifarm 71 nicht über dem Handgriff 55.

In der Eingriffsposition greifen die Gewindeabschnitte 56 in das Aussengewinde 23 des Behälters 2 ein. In der Entnahmeposition bleiben die Gewindeabschnitte 56 ausser Eingriff, sodass der Behälter 2 aus dem Gehäuse 5 ohne Rückdrehung entnommen werden kann. Hierdurch kann der Benutzer die Entnahme des verarbeiteten Lebensmittels beschleunigen, da eine Rückdrehung des Aussengewindes 23 des Behälters 2 aus dem Gehäuse 5 heraus vollständig entfallen kann.

In Fig. 4 ist die Entnahmeposition gezeigt, da das Ringelement 70 entfernt worden ist. Die Aufnahmefläche 51 ist ein im Wesentlichen zylinderförmiges Rohrelement, welches eine Mehrzahl von Ausnehmungen 52 enthält. In jeder dieser Ausnehmungen 52 ist ein Gewindeabschnitt 56 enthalten, der als ein Stegelement mit einem Halselement und einem verdickten Kopfbereich ausgebildet ist. Der verdickte Kopfbereich enthält an seiner Innenseite eine Mehrzahl von Rillen, die den Gewindeabschnitt 56 ausbilden. Das Halselement ist mit der Aufnahmefläche 51 einstückig verbunden. Weil das Halselement aus der Aufnahmefläche 51 ausgeschnitten ist, das heisst, nur an dessen Unterseite noch mit der Aufnahmefläche 51 verbunden ist, kann das Halselement durch eine von aussen wirkende Kraft nach innen gebogen werden. Diese von aussen wirkende Kraft kann über Auflageelemente ausgeübt werden, die im Ringelement 70 angeordnet sind.
Im Kopfbereich kann ein Stift 59 angeordnet sein. Dieser Stift befindet sich ausserhalb der Aussenwand der Aufnahmefläche 51.

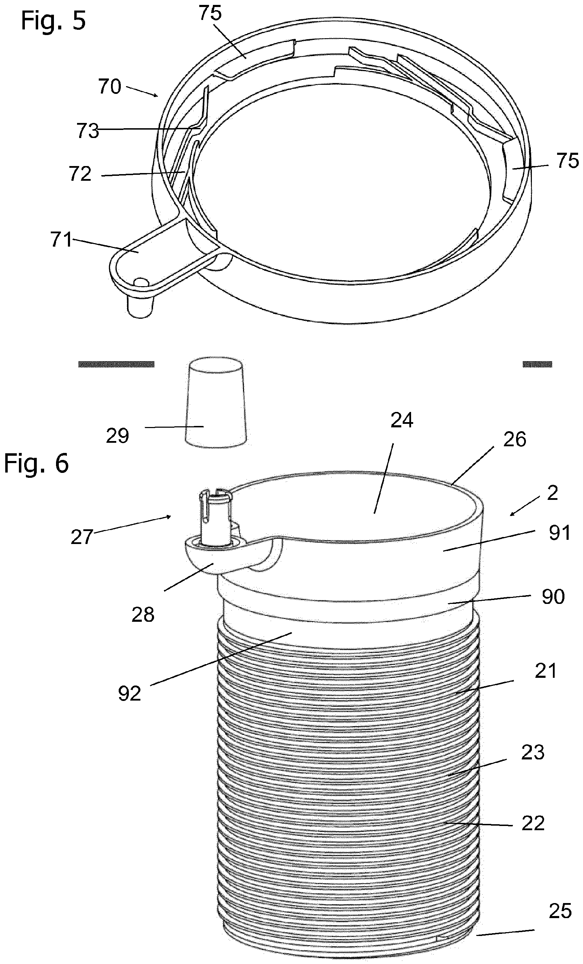

In Fig. 5 ist eine Ansicht der Innenseite des Ringelements 70 gezeigt. Das Ringelement 70 enthält Führungskanäle 72, die der Führung eines Stifts 59 dienen, der im Kopfbereich des Gewindeabschnitts 56 ausserhalb der Aufnahmefläche 51 angeordnet ist. Wenn das Ringelement 70 aus der Entnahmeposition in die Eingriffsposition bewegt wird, gleitet der Stift 59 entlang des Führungskanals 72, bis er den Anschlag 73 erreicht. In dieser Stellung ist der Gewindeabschnitt 56 in Eingriff mit dem Aussengewinde 23 oder für einen derartigen Eingriff vorbereitet. Das Ringelement 70 weist einen Flansch 74 auf, in welchem der oder die Führungskanäle 72 aufgenommen sind. Das Ringelement 70 enthält eine Mehrzahl von an dessen Innenwand verlaufenden Vorsprüngen 75. Wenn sich das Ringelement 70 auf der Aufnahmefläche 51 des Gehäuses 5 befindet, greifen diese Vorsprünge in die in Fig. 4 gezeigten Halteelemente 58 ein.

Figur 6 zeigt eine Ansicht des Behälters gemäss Fig. 1. Der Behälter 2 ist als zylinderförmiger, dünnwandiger Körper ausgebildet, dessen Mantel 20 einen Innenraum 24 begrenzt. Der Innenraum 24 dient der Aufnahme des verarbeiteten Lebensmittels. Der Mantel 20 weist eine Aussenwand 21 auf, die einen Oberflächenabschnitt 22 aufweist, der zumindest teilweise mit einem Aussengewinde 23 versehen ist. Der Oberflächenabschnitt 22 kann einen Absatz 90 aufweisen, an welchen ein
Teiloberflächenabschnitt 91 mit glatter Oberfläche anschliesst. Der Absatz 90 bildet einen Anschlag für den Flansch 74 des Ringelements 70. Der Absatz 90 verhindert, dass der Behälterboden 25 mit dem darin befindlichen Trennelement 3, 4 in Kontakt mit dem Auflageelement 6 kommen kann. Zwischen dem Absatz 90 und dem Aussengewinde 23 befindet sich ein Oberflächenteilabschnitt 92, der kein Gewinde enthält. Sobald der Benutzer die Drehung des Behälters 2 bis an das absatzseitige Ende des Aussengewindes vorangetrieben hat, ist die Verarbeitung des Lebensmittels abgeschlossen. Der Behälterboden 25 überragt in dieser Stellung das Auflageelement 6 zumindest teilweise. Der Benutzer kann die Drehbewegung ohne Widerstand fortsetzen, da der Oberflächenteilabschnitt 92 kein Gewinde enthält. Der Behälter 2 kann maximal soweit abgesenkt werden, dass der Absatz 90 auf dem Flansch 74 des Ringelements 70 aufliegt.

Figur 7a zeigt eine Ansicht eines Trennelements 3 gemäss einer ersten Variante gemäss Fig. 1. Das Schneidelement 31 kann mindestens eine Schneidkante aufweisen, insbesondere kann es genau eine Schneidkante aufweisen. Das Schneidelement 31 ist in einer Ausnehmung der Konusfläche 37 angeordnet. Das Schneidelement 31 kann auch zwei oder mehr Schneidkanten 33, 34 enthalten. Zumindest eine erste Schneidkante 33 kann im Wesentlichen parallel zur Konusfläche 37 verlaufen, eine zweite Schneidkante 34 kann in einem Winkel zur ersten Schneidkante 33 verlaufen, was in dem in Fig. 7b dargestellten Detail der Fig. 7a dargestellt ist. Insbesondere kann die erste Schneidkante 33 in einem Winkel von 70° bis 90° zur zweiten Schneidkante 34 ausgerichtet sein. Die erste Schneidkante 33 und die zweite Schneidkante 34 können Bestandteil eines Leitelements 35 sein.

Das Trennelement 3 kann mittels eines Drehverschlusses 32 im Behälterboden 25 aufgenommen werden. Das Trennelement 3 kann einen zylinderförmigen Abschnitt 38 enthalten, der eine Profilierung 36 aufweist. Die Profilierung kann einen optischen Hinweis liefern, welche Art von Verarbeitung mit dem Trennelement 3 durchgeführt werden kann. Beispielsweise können die Rillen der Profilierung 36 einen Abstand zueinander haben, der im Wesentlichen der Breite des bandförmigen Schnittguts entspricht.

Der Drehverschluss 32 ist zwischen dem zylinderförmigen Abschnitt 38 und der Konusfläche 37 angeordnet.

Figur 8 zeigt eine Ansicht eines Trennelements 4 gemäss einer zweiten Variante gemäss Fig. 1. Das Trennelement 4 weist mindestens ein erstes Schneidelement 41 und ein zweites Schneidelement 43 auf, welches in einer Konusfläche 47 angeordnet ist. Jedes der Schneidelemente 41, 43 kann mindestens eine Schneidkante 44 aufweisen, insbesondere kann es genau eine Schneidkante aufweisen. Das Schneidelement ist in einer Konusfläche 47 angeordnet. Hierzu weist die Konusfläche 47 eine Ausnehmung auf, die das Schneidelement enthält. Die Schneidkante 44 ist derart angeordnet, dass sie das Schnittgut von der Unterseite der Konusfläche 47 auf die Oberseite der Konusfläche 47 umleitet. Das Schneidelement 41 kann auch zwei oder mehr Schneidkanten enthalten, was dem Ausführungsbeispiel entspricht, das in Zusammenhang mit Fig. 7b beschrieben worden ist.

Das Trennelement 4 kann mittels eines Drehverschlusses 42 im Behälterboden 25 aufgenommen werden. Das Trennelement 4 kann einen zylinderförmigen Abschnitt 48 enthalten, der eine Profilierung 46 aufweist. Die Profilierung 46 kann einen optischen Hinweis liefern, welche Art von Verarbeitung mit dem Trennelement 4 durchgeführt werden kann. Beispielsweise können die Rillen der Profilierung 48 einen Abstand zueinander haben, der im Wesentlichen der Breite des bandförmigen Schnittguts entspricht.

Figur 9 zeigt eine Ansicht eines Auflageelements 6 gemäss des Ausführungsbeispiels der Fig. 1. Das Auflageelement 6 ist zur Auflage auf dem Aufsatzelement 54 bestimmt, welches am Gehäuseboden 53 angeordnet ist. Das Auflageelement 6 ist kuppenförmig ausgestaltet und weist ein Auflageplateau 62 auf, welches die Positionierelemente 61 enthält. Die Positionierelemente sind als dreieckförmige, scharfkantige Spitzen ausgebildet, auf welchen das Lebensmittel aufgespiesst werden kann. Alternativ könnten speerförmige Spitzen, viereckige oder andere dünnwandige, scharfkantige Vorsprünge vorgesehen sein. Insbesondere können Vorsprünge mit einer Flächenausdehnung vorgesehen sein, die eine gute seitliche Auflagefläche ausbilden und somit einen erhöhten Drehwiderstand aufweisen. Insbesondere können die Positionierelemente in verschiedenen Winkeln zueinander angeordnet sein. Durch die Schneidelemente 31, 41, 43 werden Torsionskräfte in das Lebensmittel eingeleitet, die dazu führen könnten, dass sich das Lebensmittel auf dem Auflageplateau mitdrehen kann, wenn die Schneidelement den Torsionskräften keinen oder einen zu geringen Widerstand entgegensetzen. Wenn das Lebensmittel aber die Drehbewegung des Behälters 2 ausführt, was bei Lebensmitteln vorkommen kann, die mit einer Vorrichtung nach dem Stand der Technik verarbeitet werden, wird das Lebensmittel nicht mehr geschnitten und statt dessen durch das Trennelement 3, 4 gepresst. Wenn das Trennelement keine Konusfläche aufweist und/oder die Schneidelemente stumpfe Schneidkanten aufweisen, wird das Lebensmittel nicht bestimmungsgemäss verarbeitet, sondern in eine breiartige Masse umgewandelt oder das Lebensmittel kann wegrutschen.

Die Konusflächen 37, 47 der Trennelemente 3, 4 können einen Neigungswinkel mit der Drehachse einschliessen, der 25° bis 80° beträgt, vorzugsweise 30° bis 75° beträgt.

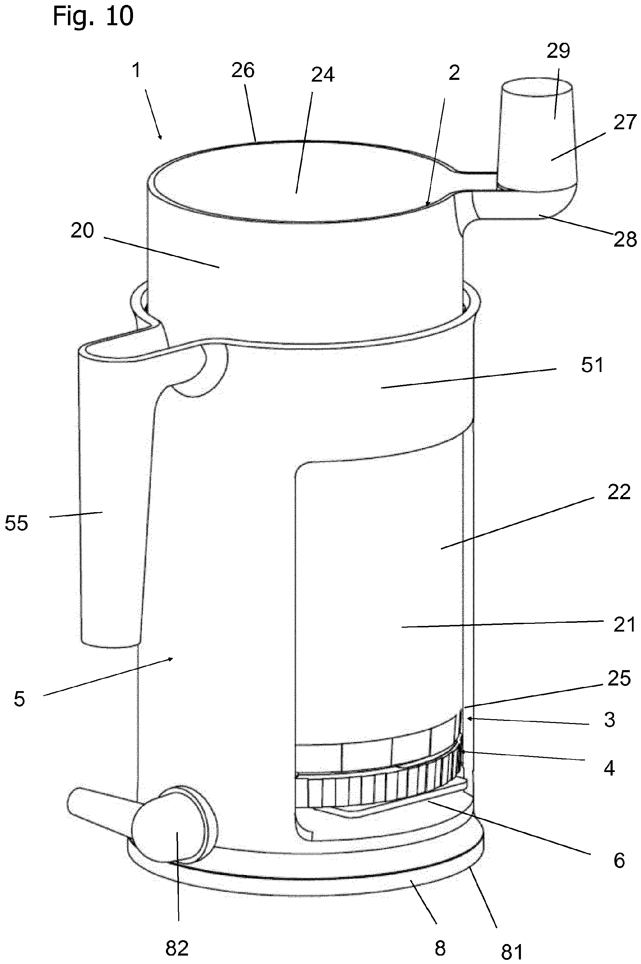

Figur 10 zeigt eine Ansicht einer Vorrichtung gemäss eines zweiten Ausführungsbeispiels der Erfindung. Gleich ausgestaltete Elemente wie im vorhergehenden Ausführungsbeispiel werden mit denselben Bezugszeichen versehen und es wird auf die Beschreibung zu Fig. 1-9 verwiesen. Nur zu den Elementen, die dieses Ausführungsbeispiel vom ersten Ausführungsbeispiel unterscheiden, werden nachfolgend weitere Ausführungen gemacht.
Das zweite Ausführungsbeispiel unterscheidet sich vom ersten Ausführungsbeispiel dahingehend, dass der Behälter 2 einen Mantel 20 aufweist, der eine Aussenwand 21 aufweist, die eine glatte Oberfläche aufweist. Die Aussenwand 21 ist somit im Gehäuse 5 frei drehbar. Daher kann der Anpressdruck, den das mit dem Behälter 2 verbundene Trennelement 3 oder 4 auf das Lebensmittel ausübt, abhängig von der Konsistenz des Lebensmittels variiert werden.

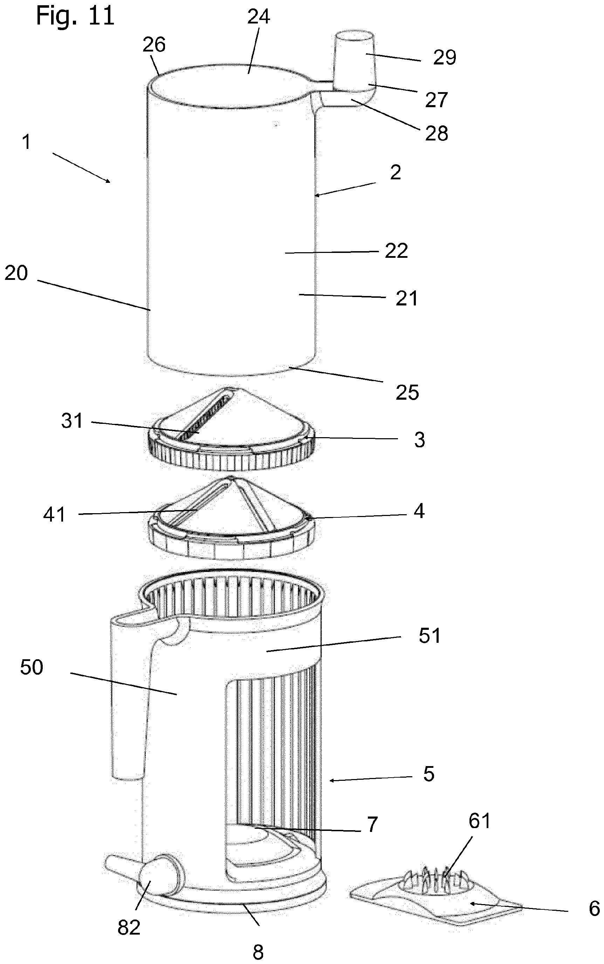

Figur 11 zeigt eine Explosionsdarstellung der Vorrichtung gemäss Fig. 10, in welcher die Anordnung der in Fig. 10 gezeigten Bestandteile der Vorrichtung sichtbar sind. Insbesondere ist in Fig. 11 eine Ansicht des Behälters 2 gezeigt, dessen Aussenwand 21 eine glatte Oberfläche aufweist. Der Behälter 2 ist ein zylinderförmiges Rohr, welches einen Mantel 20 aufweist, welcher sich vom Behälterboden 25 zur Entleerungsöffnung 26 erstreckt. Wie im Ausführungsbeispiel gemäss Fig. 1-9 weist der Behälterboden ein nicht dargestelltes Aufnahmeelement für eines der Trennelemente 3, 4 auf, die den Trennelementen gemäss Fig. 7a, Fig. 7b oder Fig. 8 entsprechen. Das Gehäuse 5 weist einen zylinderförmigen Gehäusemantel 50 auf, der wie im ersten Ausführungsbeispiel zwei gegenüberliegende Öffnungen enthält, welche zur Positionierung des Lebensmittels dienen.

Figur 12 zeigt einen Schnitt durch das Gehäuse der Vorrichtung gemäss Fig. 10. Im Unterschied zum Ausführungsbeispiel gemäss Fig. 4 wird kein Ringelement 70 benötigt, da der Behälter 2 kein Aussengewinde aufweist, welches in einem zugehörigen Innengewinde eingreifen müsste. Das Gehäuse 5 weist einen Gehäusemantel 50 auf, welcher sich zwischen der Aufnahmefläche 51 und dem Bodenelement 8 erstreckt. Der Gehäusemantel 50 weist eine erste und eine zweite Öffnung auf, um das Lebensmittel im Gehäuse positionieren zu können. Der Gehäusemantel 50 geht auf der Unterseite des Gehäuses in einen Gehäuseboden 53 über. Der Gehäuseboden 53 dient der Aufnahme eines Auflageelements 6, welches zur Positionierung des Lebensmittels verwendet wird. Das Auflageelement 6 kann einfach vom Gehäuseboden 53 abgenommen werden und gereinigt werden oder durch ein anderes Auflageelement 6 ausgetauscht werden. Der

Gehäuseboden 53 enthält hierzu ein Aufsatzelement 54, welches passend zu einer entsprechenden Ausnehmung am Auflageelement ausgebildet ist. Das Auflageelement 6 kann formschlüssig auf dem Aufsatzelement 54 gehalten werden. Um das Auflageelement 6 auf dem Aufsatzelement 54 zu befestigen, sind im Gehäuseboden eine erste und eine zweite Nut vorgesehen. Gemäss dieses Ausführungsbeispiels haben die mantelseitigen Wände der Nuten im Wesentlichen dieselbe Höhe wie das Auflageelement 6. Eine Vorrichtung gemäss des zweiten Ausführungsbeispiels kann insbesondere für Lebensmittel zum Einsatz kommen, welche einen geringeren Trennwiderstand aufweisen als die Lebensmittel, welche mit der Vorrichtung gemäss einer der Fig. 1-9 verarbeitet werden. Daher wirken geringere Torsionskräfte auf das Auflageelement 6 sowie das Aufsatzelement 54. Daher kann die Vorrichtung gemäss Fig. 12 ohne eine zusätzliche Verdrehsicherung für das Auflageelement 6 ausgeführt werden.

Oberhalb des Gehäusebodens 53 schliesst ein Zwischenraum 7 an. Dieser Zwischenraum 7 enthält zu Betriebsbeginn das Lebensmittel, welches mit der Vorrichtung verarbeitet werden soll. Das Lebensmittel kann im Gehäuse platziert werden, bevor der Behälter 2 mit dem entsprechenden Trennelement 3, 4 durch die Aufnahmefläche 51 hindurch geführt wird. Mit dem Gehäusemantel 50 kann ein Handgriff 55 verbunden sein, der dem Benutzer die Handhabung der Vorrichtung vereinfacht. Insbesondere kann der Benutzer den Handgriff 55 mit einer Hand halten, während er mittels der anderen Hand den Behälter 2 positioniert und in eine Drehbewegung versetzt.

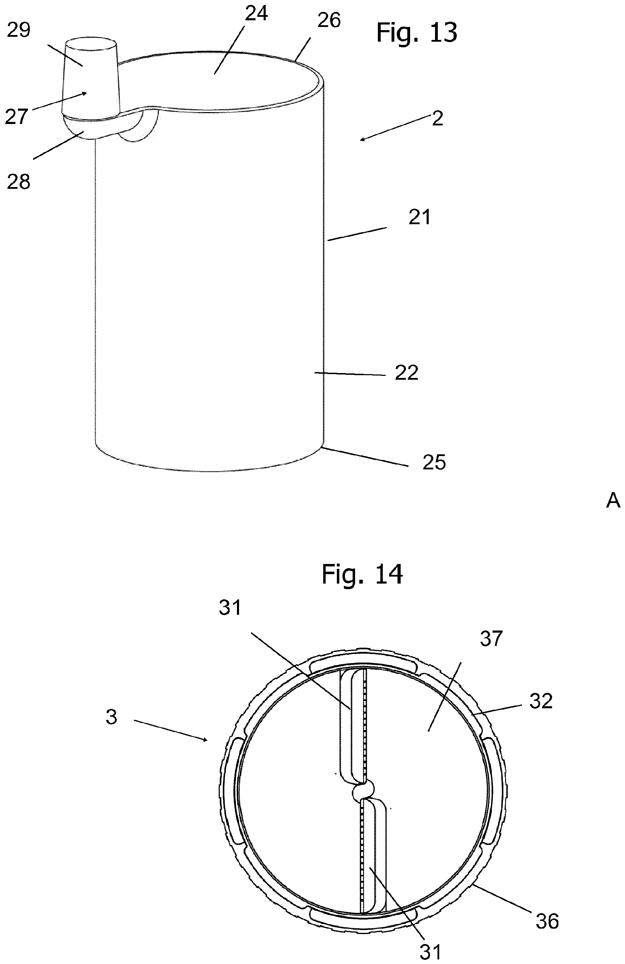

Figur 13 zeigt eine Ansicht des Behälters gemäss Fig. 10. Der Behälter 2 ist als zylinderförmiger, dünnwandiger Körper ausgebildet, dessen Mantel 20 einen Innenraum 24 begrenzt. Der Innenraum 24 dient der Aufnahme des verarbeiteten Lebensmittels. Der Mantel 20 weist eine Aussenwand 21 auf, die einen Oberflächenabschnitt 22 aufweist. Der Oberflächenabschnitt 22 kann ohne Absätze oder Vorsprünge ausgebildet sein, mit Ausnahme eines am Rand der Entnahmeöffnung 26 angeordneten Handgriffs 27, dessen Ausführung dem Handgriff der Fig. 6 entspricht. Der Behälterboden 25 enthält Aufnahmeelement für eines der Trennelemente 3, 4, wie in Fig. 7a, Fig. 7b, Fig. 8, Fig. 14 oder Fig. 15 gezeigt.
Wenn die Verarbeitung des Lebensmittels abgeschlossen ist, kann die Unterseite des Trennelements auf dem Auflageelement 6 aufliegen, sodass der Zwischenraum 7 verschwindet. Der Behälterboden 25 überragt in dieser Stellung das Auflageelement 6 zumindest teilweise. Der Benutzer kann die Drehbewegung ohne Widerstand fortsetzen, da das Auflageelement 6 kuppenförmig ausgebildet ist und ein Auflageplateau 62 enthält, welches die Positionierelemente 61 trägt. Die Konusfläche 37, 47 des Trennelements 3, 4 kommt daher nicht in Kontakt mit den Positionierelementen, sodass der Behälter 2 bzw. das Trennelement 3, 4 in Kontakt mit dem Gehäuseboden 53 oder dem Auflageelement 6 kommen kann. Wenn das Trennelement 3, 4 auf dem Gehäuseboden 53 aufliegt, ist die Verarbeitung des Lebensmittels abgeschlossen und der Behälter 2 kann aus dem Gehäuse 5 entfernt werden.

Figur 14 zeigt eine Ansicht eines Trennelements 3 gemäss einer ersten Variante gemäss Fig. 10 von oben, das heisst von der Seite, auf welcher im Betriebszustand das verarbeitete Lebensmittel zu liegen kommt. Das Trennelement 3 enthält zwei Schneidelemente 31, die in Ausnehmungen der Konusfläche 37 angeordnet sind. Das Trennelement 3 entspricht dem Trennelement 3 gemäss Fig. 7a. Nach einem in den Zeichnungen nicht dargestellten Ausführungsbeispielen kann die Klinge parallel zur Schneidefläche angeordnet werden.

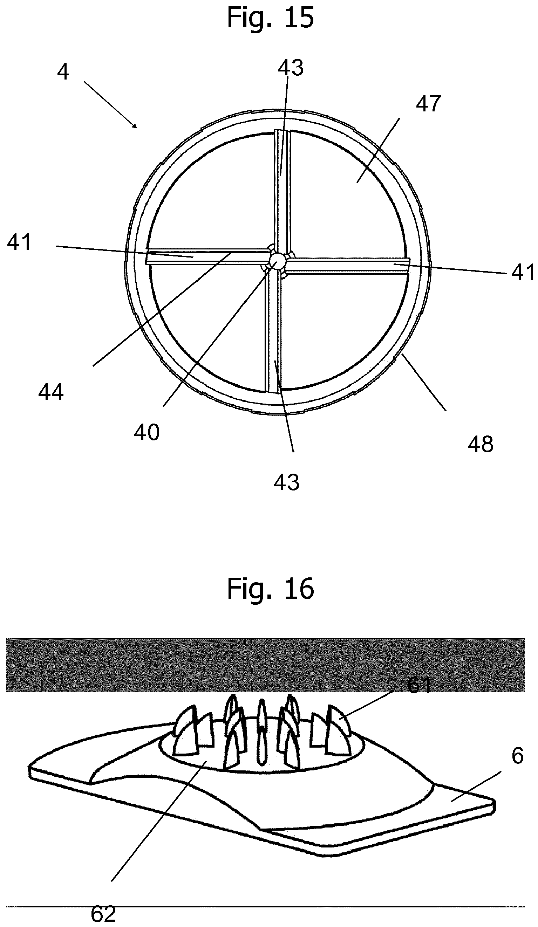

Figur 15 zeigt eine Ansicht eines Trennelements 4 gemäss einer zweiten Variante gemäss Fig. 10 von innen, das heisst, von der Seite, die dem Auflageelement 6 gegenüber liegt. Das Trennelement 4 weist ein erstes Paar von Schneidelementen 41 sowie ein zweites Paar von Schneidelementen 43 auf. Jedes dieser Schneidelemente 41, 43 weist eine Schneidkante 44 auf, die in einer Ausnehmung angeordnet ist. Der Drehverschluss 42 ist in dieser Ansicht nicht sichtbar. Ein Dornelement 40 kann in der Spitze der Konusfläche 47 angeordnet sein. Dieses Dornelement 40 kann in das Lebensmittel einstechen, um das Lebensmittel zu zentrieren und in seiner Position zwischen dem Trennelement 4 und dem Auflageelement 6 zu halten. Ein derartiges Dornelement kann selbstverständlich auch am Trennelement 3 vorgesehen sein, sowie für ein beliebig gestaltetes, weiteres Trennelement. Das Dornelement kann auch seitliche Flügel zum Einbohren ins Lebensmittel aufweisen.

Figur 16 zeigt eine Ansicht eines Auflageelements 6 gemäss des Ausführungsbeispiels der Fig. 10. Das Auflageelement 6 gemäss dieses Ausführungsbeispiels unterscheidet sich durch die Anzahl, Anordnung und Form der Positionierelemente 61. Zumindest ein Teil der Positionierelemente 61 weist insbesondere eine gekrümmte Kante auf. Die gekrümmten Kanten der Positionierelemente zeigen insbesondere nach aussen, das heisst in Richtung der Innenwand des Gehäuses 5, sodass die Positionierelemente nicht in Kontakt mit der Innenwand der Konusfläche kommen können, wenn der Behälter in auf dem Gehäuseboden 53 zu liegen kommt. Die gezeigten Positionierelemente 61 stellen nur eine Auswahl an möglichen Formen von Positionierelementen dar.

Ein Verfahren zum Durchtrennen eines Lebensmittels zur Erzeugung eines bandförmigen, insbesondere spiralförmigen, Schnittguts, umfasst die nachfolgenden Schritte: Positionieren einer Vorrichtung 1 zur Verarbeitung von Lebensmitteln auf einer Unterlage, Entnehmen eines Behälters 2 aus einem Gehäuse 5, Positionieren eines Lebensmittels auf einem Auflageelement 6, Einsetzen eines Trennelements 3, 4 in den Behälter 2. Die Verarbeitung des Lebensmittels erfolgt durch die nachfolgenden Schritte: Positionieren des Behälters 2 mit dem Trennelement 3, 4 oder ein beliebig gestaltetes, weiteres Trennelement auf dem Lebensmittel im Gehäuse 5, sodass das Lebensmittel zwischen dem Auflageelement 6 und dem Trennelement 3, 4 gehalten oder eingeklemmt wird und der Behälter 2 im Gehäuse 5 aufgenommen ist, Drehen des Behälters 2 im Gehäuse 5, wobei durch das Trennelement 3, 4 das Lebensmittel durchtrennt wird und das bandförmige, spiralförmige Schnittgut im Innenraum des Behälters 2 aufgenommen wird, Entnahme des Behälters 2 mit dem Schnittgut nach Abschluss der Verarbeitung. Insbesondere kann das Gehäuse 5 ein drehbares Ringelement 70 aufweisen, wobei das Ringelement 70 von der Entnahmeposition in die Eingriffsposition bewegt wird, bevor die Drehung des Behälters im Gehäuse eingeleitet wird, sodass das Innengewinde des Ringelements 70 in Eingriff mit dem Aussengewinde 23 des Behälters 2 gelangt. Dieser Verfahrensschritt wird durchgeführt, wenn der Behälter 2 an seiner Aussenwand 21 ein Aussengewinde 23 aufweist, welches in ein entsprechendes Innengewinde oder einen Innengewindeabschnitt des Ringelements 70 eingreifen kann.

Für den Fachmann ist offensichtlich, dass viele weitere Modifikationen zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nichtausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C... N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Vorrichtung (1) zur Verarbeitung von Lebensmitteln umfassend einen Behälter (2) enthaltend ein Trennelement (3, 4) zum Durchtrennen eines Lebensmittels zur Erzeugung eines bandförmigen, spiralförmigen Schnittguts, ein Gehäuse (5) zur Aufnahme des Behälters (2) sowie ein Auflageelement (6) zur Auflage des Lebensmittels, wobei der Behälter (2) im Gehäuse (5) drehbar ist, **dadurch gekennzeichnet, dass** ein Zwischenraum (7) zwischen dem Auflageelement (6) und dem Trennelement (3, 4) zur Einspannung des Lebensmittels vorgesehen ist, wobei das Trennelement (3, 4) zum Durchtrennen des Lebensmittels mit dem Behälter (2) verbunden ist, sodass das Schnittgut durch Drehbewegung des Behälters (2) mittels des Trennelements (3, 4) erzeugbar ist und in einen Innenraum (24) des Behälters (2) führbar ist.

2. Vorrichtung nach Anspruch 1, **dadurch gekennzeichnet, dass** das Gehäuse (5) ortsfest ist.

3. Vorrichtung nach Anspruch 1 oder 2, **dadurch gekennzeichnet, dass** der Behälter (2) eine Aussenwand (21) enthält, die einen Oberflächenabschnitt (22) enthält, welcher zumindest eine der Varianten einer glatten Oberfläche oder eines Aussengewindes (23) umfasst.

4. Vorrichtung nach einem der vorhergehenden Ansprüche, **dadurch gekennzeichnet, dass** der Behälter (2) einen Behälterboden enthält, welcher durch das Trennelement (3, 4) verschliessbar ist.

5. Vorrichtung nach einem der vorhergehenden Ansprüche, **dadurch gekennzeichnet, dass** das Gehäuse 5 eine Aufnahmefläche (51) für den Mantel (20) des Behälters (2) aufweist, wobei die Aufnahmefläche (51) einen Gewindeabschnitt enthalten kann.

6. Vorrichtung nach Anspruch 5, **dadurch gekennzeichnet, dass** die Aufnahmefläche (51) in einem Ringelement (70) aufgenommen ist, welches zwischen einer Eingriffsposition und einer Entnahmeposition schwenkbar ist.

7. Vorrichtung nach einem der vorhergehenden Ansprüche, **dadurch gekennzeichnet, dass** das Trennelement (3,4) eine konische Oberfläche enthält, in welcher zumindest ein Schneidelement (31, 41) aufgenommen ist.

8. Vorrichtung nach einem der vorhergehenden Ansprüche, **dadurch gekennzeichnet, dass** ein erstes Trennelement (3) und ein zweites Trennelement vorgesehen sind, wobei das erste Trennelement (3) abnehmbar und durch das zweite Trennelement (4) ersetzbar ist.

9. Verfahren zum Durchtrennen eines Lebensmittels zur Erzeugung eines bandförmigen, spiralförmigen Schnittguts, umfassend die nachfolgenden Schritte: Positionieren einer Vorrichtung (1) zur Verarbeitung von Lebensmitteln auf einer Unterlage, Entnehmen eines Behälters (2) aus einem Gehäuse (5), Positionieren eines Lebensmittels auf einem Auflageelement (6), Einsetzen eines Trennelements (3, 4) in den Behälter (2), Positionieren des Behälters (2) mit dem Trennelement (3, 4) auf dem Lebensmittel im Gehäuse (5), sodass das Lebensmittel zwischen dem Auflageelement (6) und dem Trennelement (3, 4) gehalten oder eingeklemmt wird und der Behälter (2) im Gehäuse (5) aufgenommen ist, Drehen des Behälters (2) im Gehäuse (5), wobei durch das Trennelement (3, 4) das Lebensmittel durchtrennt wird und das bandförmige, spiralförmige Schnittgut im Innenraum des Behälters (2) aufgenommen wird, Entnahme des Behälters (2) mit dem Schnittgut nach Abschluss der Verarbeitung.

10. Verfahren nach Anspruch 9, **dadurch gekennzeichnet, dass** das Gehäuse (5) ein Ringelement (70) enthält, welches von der Entnahmeposition in die Eingriffsposition bewegt wird, bevor die Drehung des Behälters (2) im Gehäuse (5) eingeleitet wird.
